Europäisches Patentamt

**European Patent Office**

Office européen des brevets

(19)

(11) Publication number : **0 515 478 B1**

(12) # EUROPEAN PATENT SPECIFICATION

(45) Date of publication of patent specification :
**15.12.93 Bulletin 93/50**

(51) Int. Cl.⁵ : **B01J 2/04**

(21) Application number : **91904361.2**

(22) Date of filing : **15.02.91**

(86) International application number :
**PCT/DK91/00043**

(87) International publication number :
**WO 91/12074 22.08.91 Gazette 91/19**

(54) **PROCESS AND APPARATUS FOR PRODUCING A GRANULATE BY SPRAY DRYING.**

(30) Priority : **15.02.90 DK 398/90**

(43) Date of publication of application :
**02.12.92 Bulletin 92/49**

(45) Publication of the grant of the patent :
**15.12.93 Bulletin 93/50**

(84) Designated Contracting States :
**AT BE CH DE DK ES FR GB GR IT LI LU NL SE**

(56) References cited :
**EP-A- 0 097 484**
**EP-A- 0 212 714**
**US-A- 3 735 792**
**US-A- 3 849 233**

(73) Proprietor : **APV Anhydro A/S**
**8, Ostmarken**
**DK-2860 Soborg (DK)**

(72) Inventor : **HALLSTRÖM, Anders**
**Molleaparken 57 E2**
**DK-2800 Lyngby (DK)**

(74) Representative : **Hegner, Mogens (DK) et al**
**c/o Hofman-Bang & Boutard A/S Adelgade 15**
**DK-1304 Copenhagen K (DK)**

## Description

The present invention relates to a process and an apparatus for producing a substantially dust-free granulate with a desired mean particle size and a narrow particle size distribution by spray drying.

In the present context "granulation" is defined as the building up of larger solid particles from smaller solid particles, also referred to as "(fine) solid starting material/particles"; "granulate" and "granulate material" is defined as the product obtained by granulation.

It is well known that granulate material may be produced by using fluidized bed methods where a solution or suspension of the material to be granulated is sprayed on or into a fluidized bed containing solid particles to be granulated. It is also well known that the finer part of the product discharged from the fluidized bed may be returned for further granulation in the fluidized bed, cf. DEOS 22 31 445; DEOS 25 55 917; EP 87 039 and EP 163 836.

A typical feature of the fluidized bed methods consists in that the granulation process is taking place under conditions corresponding to a completely stirred reactor. Therefore, these methods operate with long residence times for the solid particles. The solid starting material is substantially identical with the material discharged from the granulation zone, and it is thus generally necessary to separate the discharged material into three fractions, viz. a fine undersize fraction, a product fraction and an oversize fraction, which may be ground and returned to the granulation zone.

The term "granulation efficiency" is defined as the weight fraction of material leaving the granulation zone which falls within a specified, desired product range. The "recycle ratio" is defined as the weight ratio between recirculated material and material withdrawn as product.

Until now no efficient fluidized bed process has been disclosed yielding a dust-free product with desired mean particle size and a narrow particle size distribution.

It is further known that the products produced by ordinary spray drying generally have a low mean particle size, typically within the range 50-150 µm, in some cases even less and often present serious dust problems.

In order to produce larger sized particles utilizing the principles of spray drying combined spray drying, fluidized bed and agglomeration processes have been suggested.

From US PS 3,849,233 and EP 97 484 a process is known wherein a fluidized bed is arranged at the lower part of the drying chamber of a spray drying unit. In this process the particles produced in the spray drying zone are blown into the fluidized bed by the drying gas from the spray drying zone. Hereby particles from the fluidized bed are blown up into the spray drying zone. Since the spray drying zone is operated to provide exit particles with a rather high moisture content agglomeration may take place in the spray drying zone as well as in the fluidized bed.

From US PS 3,735,792 another combined spray drying fluidized bed and agglomeration process is known. This process takes also place in a chamber containing a fluidized bed arranged at the bottom of said chamber. Liquid feed is sprayed as droplets into the chamber by a fluid atomizer arranged at the top of the chamber. Primary air enters through a perforated plate at the bottom of the chamber and acts as fluidization and drying air. Secondary air fed in at the top of the chamber imparts a spiral motion to the air flow in the chamber whereby particles are withdrawn from the upper part of the fluidized bed and suspended particles are caused to make a circulatory motion in the zone above the fluidized bed. Granulates are thus formed by collision between particles and droplets and between moist particles, presumably mainly in the fluidized bed. Particles are continuously discharged from the fluidized bed, preferably via a discharge pipe countercurrently to a rising air stream, which may return a certain amount of the fines in the withdrawn product to the fluidized bed whereby a limited reduction of the dust content of the product may be achieved.

Finally, the so-called straight-through process should be mentioned as a combined spray drying and granulation process. By this process the product withdrawn from the spray drying zone is subjected to a further drying step in a fluidized bed. Particles removed from the fluidized bed by the fluidizing gas are returned to the spray drying zone and granulation takes place in this zone by collision between return particles and droplets and between moist return particles.

It is important to observe that the particle build-up mechanisms in a fluidized bed process differ from that of a spray drying granulation process. The most essential differences being the following:

As mentioned above the fluidized bed granulation process corresponds to a reaction in a completely stirred reactor having a long residence time for the reactor content, wherein the solid starting material, as defined above, is substantially identical with the material discharged from the granulation zone, whereas the process comprising granulation in the spray drying zone is similar to the reaction in a plug flow reactor with a very short residence time for the reactants, wherein the solid starting material is substantially identical with the recirculated material.

In the fluidized bed granulation process only a minor amount of liquid is introduced per second relative to

2

the solid material available, whereas a much larger specific amount of liquid is introduced in the spray drying granulation process. It is desired to operate with a high liquid solid ratio in the granulation zone because this favours high strength of the granulates. However, fluidized bed granulation process cannot be safely operated at such high ratios, because the process becomes increasingly unstable, when the liquid solid ratio is increased, the problem being an increasing risk for break down of the granulation process due to formation of large lumps of sticky material.

In all granulation processes it is necessary to introduce or create fine starting particles necessary for the build-up of the granulated particles. In the fluidized bed granulation process these fine starting particles are mainly generated by attrition or grinding of already formed granulates and the rate of introduction of these fine particles into the granulation process can only be effectively controlled by controlled introduction of ground granulates, e.g. oversize particles. In contrast, fine starting particles are easily produced in the spray drying agglomeration by evaporation of droplets which have not collided with solid particles in the spray drying zone.

In the fluidized bed granulation process the starting particles are generally only comprising a small percentage of fine particles, whereas a large percentage of fine starting particles is characteristic for the known granulation processes involving spray drying. This high percentage is actually representing a problem in the straight-through process because it leads to the formation of a granulated product with an unacceptably high content of dust.

Granulates produced in a fluidized bed are in general rather coarse with a typical mean particle size about 1-5 mm, whereas granulates produced in a spray drying zone in general have a mean particle size less than about 300 μm.

For environmental reasons the demand for a low dust content in solid products has increased considerably during recent years, not least in respect of products for use in agriculture and the dyestuff industry. These demands have only with great difficulty been satisfied in respect of products produced according to the known art.

The object of the invention is to provide a process and an apparatus for producing a granulated product
- with a low dust content;
- with a desired mean particle size ($d_{50}$);
- with $d_{50}$ value smaller than or equal to about 1000 μm, preferably within the interval 150-400 μm;
- with a narrow particle size distribution corresponding to at least 70, preferably at least 80 % by volume, between 0.5 $d_{50}$ and 1.5 $d_{50}$; and
- having high abrasion strength and excellent fluid-mechanical properties;
by a spray drying granulation process in which
- the recycle ratio is kept at a very low level;
- the mass ratio between liquid and solid feed to the spray drying and granulation zone is high;
- the formation of dust is reduced to a minimum;
- the residence time of the material in the granulation zone is kept at a very low level; and
- a subsequent cooling of the granulated product can be performed in a highly efficient way;
which method can be carried out in/which apparatus is a compact apparatus which, if desired, may be constructed by slight and inexpensive modification of existing spray drying plants.

We have now found that the object of the invention set forth above can be attained by a process for producing a substantially dust-free granulate with a desired mean particle size and a narrow particle size distribution by spray drying a solution or suspension of the material to be granulated comprising the steps of atomizing the solution or suspension to droplets in an atomizing zone in the upper part of a spray drying and granulation zone in a drying chamber;
contacting said atomized solution or suspension with a central downward stream of drying gas and a stream of solid feed particles introduced on blown directly into the upper part of the spray drying and granulation zone to obtain a granulate by enlargement of the size of said particles by collision between droplets and feed particles and between moist feed particles;
adjusting the amount of introduced solution or suspension to the amount and drying capacity of introduced drying gas to ensure a desired moisture content of the particles or granulates leaving the spray drying and granulation zone and evaporation of non colliding droplets to formation of fine particles;
withdrawing a stream of spent drying gas from the spray drying and granulation zone;
withdrawing the particles or granulates leaving the spray drying and granulation zone from the drying chamber; and
subjecting said withdrawn particles or granulates to a size classification into two fractions in a counter-current gas/gravity classifier, preferably multistage, wherein the particles or granulates are introduced in a rising gas stream in a separation zone and separated into a coarse fraction of the predetermined particle size which is withdrawn as product and an undersize fraction, which is withdrawn from the separation zone as an entrained

EP 0 515 478 B1

suspension in the exit gas from the classifier and returned to the spray drying and granulation zone as solid feed particles.

By this method it is possible to produce a substantially dust-free granulated product with a $d_{50}$ value within the desired range and the desired narrow particle size distribution having high abrasion strength and excellent fluid-mechanical properties.

The granulate obtained by the method according to the invention may typically exhibit a mean particle size within the interval 150-400 $\mu$m; a particle size distribution showing at least 70, typically at least 80 % by volume particles in the interval [0.5 $d_{50}$, 1.5 $d_{50}$] and exhibit a low content of dust.

The recycle ratio is low, the mass ratio between liquid and solid feed to the spray drying and granulation zone is high and the residence time of the material in the granulation zone may be kept at a very low level, which is particularly advantageous when granulating heat sensitive materials.

One of the characteristic features of the invention resides in the fact that the use of a countercurrent gas/gravity classifier allows a very "sharp cut" as defined below:

The efficiency of a particle size classifier may be expressed by the so-called grade efficiency curve which is a graph showing g(x) as a function of x, where x is particle size and g(x) is the volume percent of particles separated as coarse particles in the size range [x,x+dx].

A classifier exhibiting a "sharp cut" is defined as a classifier with a low value for $x_{90}/x_{10}$, typically less than 6.0; where $x_y$ is defined by $g(x_y) = y$. Countercurrent gas/gravity classifiers exhibiting $x_{90}/x_{10}$-values less than 6.0 are obtainable in practice, and $x_{90}/x_{10}$-values less than 4.2 and even less than 2.5 can also be achieved by these classifiers.

An essential advantage of using a countercurrent gas/gravity classifier resides in that the cut size, defined as the value of $x_{50}$, may be varied within a rather broad range, e.g. by adjusting the gas velocity in the classifier, typically between 0,3 and 3 m/s, independently of the other process parameters. A selected mean particle size of the granulate product is obtained by selecting a suitable value for the cut size of the classifier.

A further essential advantage of using a countercurrent gas/gravity classifier consists in the "sharp cut" obtained by using this type of classifier, which ensures an extremely favourable particle distribution of the stream of solid feed particles introduced into the upper part of the spray drying and granulation zone, which, as mentioned above, is substantially identical with the particle distribution of the solid starting material in the granulation process according to the invention.

Since only a minor amount of coarse particles are recirculated to the granulation zone not only the desired narrow particle size distribution of the product, but also the desired granulation efficiency are obtained.

Another characteristic feature of the countercurrent gas/gravity classifier resides in the possibility of operating with a relatively small gas volume compared with the gas volume used in a far less efficient fluidized bed classifier.

Since the process according to the invention operates with a high ratio between the liquid feed and fine solid starting material high granulate strength is obtained.

The solution or suspension may be atomized to droplets in a rotary atomizer, a pressure nozzle atomizer or a pneumatic or two-fluid atomizer.

The exit gas from the spray drying granulation zone may entrain fine particles from the granulation zone. If desired, these "exit gas particles" may be precipitated, e.g. in a cyclone, and returned to the spray drying granulation zone, preferably to the upper part of that zone.

The recirculated particles from the classifier and the exit gas particles if returned are preferably introduced into the spray drying granulation zone in the immediate vicinity of the atomizing zone.

The moisture content of the particles or granulates leaving the spray drying and granulation zone is preferably adjusted to a value ensuring that said particles or granulates do not exhibit any sticky character. This measure is particularly important when the process does not comprise further drying in a second drying zone in a fluidized bed.

This process is suited for agglomerating a large number of materials including

agrochemical compounds such as pesticides, e.g. insecticides, acaricides, nematodicides and fungicides, herbicides, plant growth controlling compounds and fertilizers;

pharmacologically active compounds;

animal feed products;

food products including milk products;

dyestuffs and pigments;

resins and polymers;

and other organic and inorganic substances including fermentation products, plant extracts, amino acids and proteins, enzymes, food additives, and byproducts from the slaughterhouse, dairy and paper and pulp industry.

The process is particularly suited for granulating heat sensitive materials.

4

If desired, the particles or granulates leaving the spray drying and granulation zone may be subjected to further drying in a second drying zone comprising a fluidized bed arranged at the bottom of the drying chamber before they are withdrawn from the drying chamber.

If desired, further granulation may be achieved in the fluidized bed, e.g. by spraying a minor amount of liquid into or onto the fluidized bed.

According to a preferred embodiment a multistage countercurrent gas/gravity classifier is employed, preferably a "zigzag classifier". The construction and operation principles of zigzag classifiers are well known and described in e.g. GB PS 468 212.

When the process according to the invention is carried out without a second drying zone in a fluidized bed at the bottom of the drying chamber the undersize fraction from the classifier may be reintroduced via a particle exit opening at the bottom of the spray drying agglomeration chamber and blown directly into the upper part of the spray drying and granulation zone by the exit gas from the classifier.

However, improved contact between droplets and recirculated material may be achieved in an embodiment where the particles or granulates leaving the spray drying and granulation zone are withdrawn from the drying chamber via a gas lock and the undersize fraction from the classifier is transported to the upper part of the spray drying and granulation chamber entrained by the exit gas from the classifier and introduced into said upper part, optionally after having been separated from said exit gas.

When the process according to the invention is carried out with a second drying zone in a fluidized bed at the bottom of the drying chamber the particles or granulates may be withdrawn through an exit opening situated at the upper part of the fluidized bed, the undersize fraction being reintroduced via said exit opening and blown directly into the upper part of the spray drying and granulation zone by the exit gas from the classifier.

However, improved contact between droplets and recirculated material may be achieved in an embodiment wherein the particles or granulates are withdrawn from the lower part of the fluidized bed via a gas lock or through an exit opening situated at the upper part of the fluidized bed and the undersize fraction from the classifier is transported to the upper part of the spray drying and granulation chamber entrained by the exit gas from the classifier and introduced into said upper part, optionally after having been separated from said exit gas.

According to a preferred embodiment the cut size of the air classifier is selected within the interval 1.2-5.5 times the upper limit for the dust interval, defined as the size range for unacceptable fines in the product, preferably in the interval 2.0-3.5 times the said upper limit.

According to another preferred embodiment the recycle ratio is selected within the range 0.15-3, preferably within the range 0.2-1.0.

According to a further preferred embodiment the classifier is adjusted to provide a separation efficiency corresponding to a $x_{90}/x_{10}$-value (as defined above) less than 6.0, preferably less than 4.2, in particular less than 2.5.

According to a preferred embodiment the countercurrent gas/gravity classifier is utilized as a cooler by introducing a cold gas into the classifier.

This embodiment is particularly advantageous because of a very efficient countercurrent heat exchange, resulting in a substantial reduction of the volume of cooling gas, and a very compact apparatus, compared to the alternative: a fluidized bed cooler.

The process may be carried out in an apparatus for producing a substantially dust-free granulate with a desired mean particle size and a narrow particle size distribution by spray drying a solution or suspension of the material to be granulated comprising a spray drying granulation chamber with substantially conical, downward tapering walls provided with
a drying gas inlet, and a liquid inlet provided with an atomizer, arranged in the upper part of the chamber;
a drying gas outlet;
an inlet for a stream of solid feed particles;
a material outlet arranged at the lower part of the chamber connected to a material inlet of a countercurrent gas/gravity classifier with a separation gas inlet, a product outlet provided with a gas lock and an outlet for a fraction of fine particles suspended in separation gas connected to the inlet for the stream of solid feed particles.

According to a preferred embodiment the material outlet of the chamber is connected to the material inlet of the classifier via a gas lock, and the inlet for the stream of solid feed particles is arranged in the upper part of the chamber and connected to the fine material fraction outlet of the classifier via a conduit.

According to another preferred embodiment a perforated horizontal plate for supporting a fluidized bed and an inlet for fluidizing gas are arranged at the bottom of the chamber.

According to a further preferred embodiment an opening functioning as material outlet of the chamber as well as inlet for the stream of solid feed particles is arranged at the lower part of the chamber at a position over the perforated horizontal plate for supporting the fluidized bed.

According to yet a further preferred embodiment the material outlet of the chamber is arranged at the perforated horizontal plate for supporting the fluidized bed and connected to the material inlet of the classifier via a gas lock or as an opening arranged at the lower part of the chamber at a position over the perforated horizontal plate for supporting the fluidized bed and connected to the material inlet for the classifier; and the inlet for the stream of solid feed particles is arranged in the upper part of the chamber and connected to the fine material fraction outlet of the classifier via a conduit.

The invention is further described with reference to the drawing illustrating the present invention.

On the drawing
- figure 1 and 2 show schematically lay-outs for a spray drying granulation process without fluidized bed;
- figure 3 and 4 show schematically lay-outs for a spray drying granulation process comprising a fluidized bed;
- figure 5 and 6 are photomicrographs of particles of protein produced by the process according to the invention and ordinary spray drying, respectively; and
- figure 7 shows a graph of $d_{50}$ as a function of the gas velocity, v, in the air classifier.

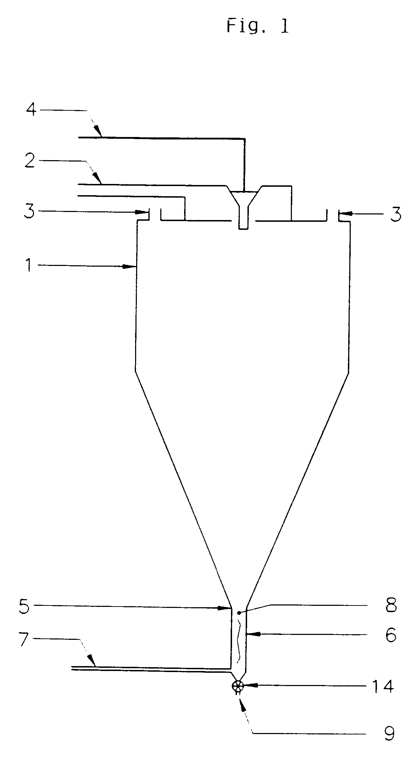

In fig. 1 1 represents a spray drying granulation chamber provided with a drying gas inlet 2, two drying gas outlets 3, a drying gas outlet may also be arranged at the lower part of the chamber 1, and a liquid inlet 4 provided with an atomizer. The chamber 1 has a material outlet 5 connected to a countercurrent gas/gravity classifier 6 with a gas inlet 7, an outlet 8 for fines suspended in gas and a product outlet 9 provided with a rotary valve 14.

In operation hot drying gas is introduced via the drying gas inlet 2 and liquid is introduced into the chamber 1 via a liquid inlet 4 and atomized to droplets. A part of these droplets evaporate under formation of fine solid particles and a substantial part of these droplets collide with the fine particles recirculated from the classifier 6 under formation of granulates which are withdrawn with the fine solid particles from the granulation chamber via the material outlet 5 and screened in the air classifier 6. The granulated end product is discharged as the coarse fraction from the classifier 6 via the product outlet 9. The spent drying gas from the spray drying granulation zone is withdrawn via the gas outlets 3. This gas may contain entrained fine particles which, if desired, may be precipitated in a cyclone or a filter and returned to the spray drying granulation zone.

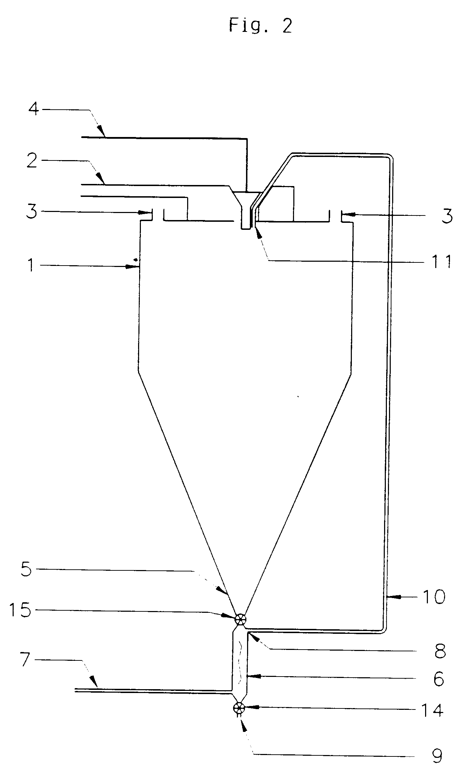

In fig. 2 1 represents a spray drying granulation chamber and 2, 3, 4, 6, 7, 8, 9 and 14 refer to corresponding apparatus parts as above. In this embodiment the outlet 8 is connected to a transfer pipe 10 with an opening 11 situated in the immediate vicinity of the atomizing zone. The recirculated fine material may be precipitated in a not shown cyclone before it is introduced into the spray drying granulation zone. In this case the material outlet 5 is provided with a rotary valve 15.

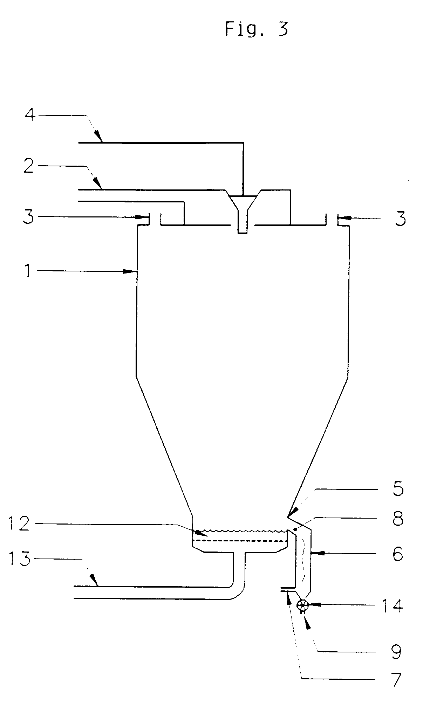

In fig. 3 1 represents a spray drying granulation chamber provided with a fluidized bed 12 having a fluidization gas inlet 13 and arranged at the bottom of the chamber 1. Reference numerals 2, 3, 4, 5, 6, 7, 8, 9 and 14 refer to corresponding apparatus parts as above. But in this case the material outlets 5 and 8 are arranged at the upper part of the surface of the fluidized bed 12.

In operation heating gas is introduced via the heating gas inlet 2 and liquid is introduced into the chamber via the liquid inlet 4 and atomized to droplets. A part of these droplets evaporate under formation of fine solid particles and a substantial part of these droplets collide with the fine particles recirculated from the classifier 6 under formation of granulates. These granulates and the fine solid particles are transferred to the fluidized bed 12 where they are subjected to further drying. The material is withdrawn from the fluidized bed via the material outlet 5 and screened in the air classifier 6. The granulated end product is discharged as the coarse fraction from the classifier 6 via the product outlet 9. The spent heating gas from the spray drying granulation zone is withdrawn via the gas outlets 3. This gas may contain entrained fine particles which, if desired, may be precipitated in a cyclone and returned to the spray drying granulation zone.

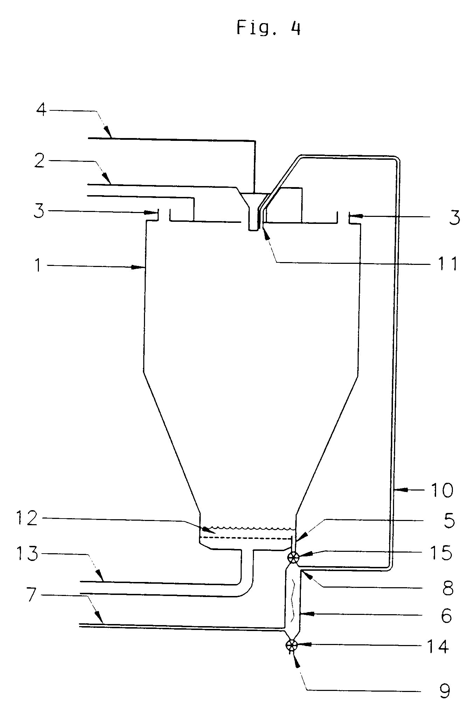

In fig. 4 1 represents a spray drying granulation chamber provided with a fluidized bed 12 having a fluidization gas inlet 13 and arranged at the bottom of the chamber 1. Reference numerals 2, 3, 4, 5, 6, 7, 8, 9 and 14 refer to corresponding apparatus parts as above. But in this case the material outlet 5 is arranged at the bottom of the fluidized bed 12 and provided with a rotary valve 15, and the outlet 8 is connected to a transfer pipe 10 with an opening 11 situated in the immediate vicinity of the atomizing zone. Also in this case the recirculated fine material may be precipitated in a not shown cyclone before it is introduced into the spray drying granulation zone.

These embodiments are only given as examples. In another preferred embodiment the material outlet 5 is arranged as shown in fig. 3, whereas the outlet 8 of the classifier 6 is connected to a transfer pipe 10 with an opening 11 situated in the immediate vicinity of the atomizing zone as shown in fig. 4.

The process according to the invention will be further illustrated by means of the following examples.

EXAMPLE 1

A suspension of single-cell protein with a content of 13% dry matter was granulated in an apparatus according to the invention by means of a rotary atomizer. In this apparatus the material outlet 5 was arranged as shown in fig. 3, the outlet 8 of the classifier 6 was connected to a transfer pipe 10 with an opening 11 situated in the immediate vicinity of the atomizing zone as shown in fig. 4, and the gas outlet 3 was arranged not at the upper part of the chamber, but at the lower part over the surface of the internal fluidized bed.

The amount of feed was approx 800 kg/h. The granulated material was via an internal fluidized bed in the chamber passed to a countercurrent gas/gravity classifier. The internal fluidized bed was used for afterdrying and distribution of the granulate to the classifier. The amount of drying air introduced into the spray drying chamber was approx. 7000 kg/h, and the amount of air for the classifier which was also used as a cooler (cold separation air) was 160 kg/h corresponding to a gas velocity in the classifier of 0.5 m/s. Fine particles from the air classifier as well as fine particles separated from the exit gas from the spray drying granulation chamber were recirculated to the atomizing zone by means of a pneumatic conveyor system.

Further process conditions and data are shown in table 1.

## TABLE 1

**Temperature**

| | |
|---|---|
| Feed, °C | 40 |
| Inlet gas to chamber, °C | 338 |
| Gas to classifier, °C | 21 |
| In fluidized bed, °C | 63 |
| Exit gas from chamber, °C | 87 |
| RH*) in chamber, % | 25 |
| MC*) in product, % | 4.1 |

**Classifier properties**

| | |
|---|---|
| $x_{90}/x_{10}$ ratio | about 4 |
| Cut size/upper dust limit ratio | about 2.6 |

*) RH: Relative humidity; MC: Moisture content

The granulates withdrawn as product from the air classifier had a temperature of 28°C and exhibited a particle size distribution, which can be expressed as a Rosin-Rammler-distribution having a mean size of 157 $\mu$m and a slope of 3.2, corresponding to $d_{50}$ = 140 $\mu$m, and 73% by vol. between 0.5 $d_{50}$ and 1.5 $d_{50}$.

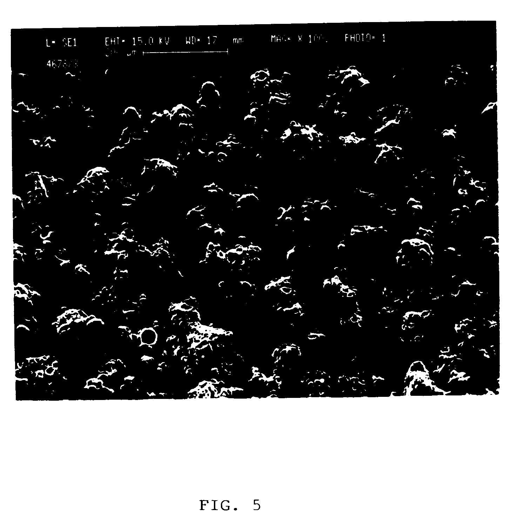

A scanning picture of these granulates is shown in fig. 5.

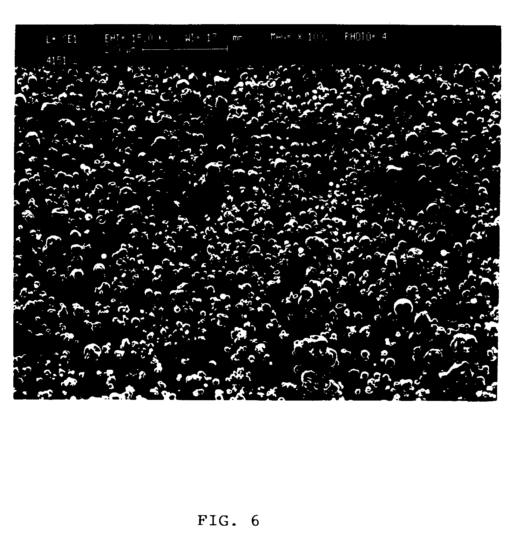

For reasons of comparison a suspension of the same starting material but with a content of 25% dry matter was spray dried in a corresponding ordinary spray dryer. Fig. 6 shows a scanning picture of the single-cell particles obtained as a product by this process. This product exhibited: $d_{50}$: 20 $\mu$m, and 66 % vol. between 0.5 $d_{50}$ and 1.5 $d_{50}$.

The flowability-properties of these products were determined by measurement of the Hausner ratio.

As further described in e.g. Svarovsky, L., Powder Testing Guide, Elsevier (1987) the Hausner ratio is defined as the ratio of the tapped bulk density to the untapped bulk density.

A value of the Hausner ratio close to unity indicates weak interparticle forces ensuring excellent flowability, whereas a high value e.g. greater than 1.4 indicates poor flowability.

The Hausner ratio for the product produced according to the invention was measured to 1.06, and the Hausner ratio for the product produced by ordinary spray drying was measured to 1.46.

EXAMPLE 2

An aqueous suspension of an organic agricultural chemical with a content of 32% dry matter was granulated in an apparatus similar to the one used in example 1. However, the suspension was not atomized by means of a rotary atomizer, but by a nozzle with a working pressure of 70 bar, and the gas outlet was arranged in the upper part of the chamber as shown in fig. 3. A minor amount of the suspension was sprayed directly onto the internal fluidized bed by a secondary nozzle arranged immediately over the internal fluidized bed. Approx. 350 kg aqueous suspension were atomized per hour, 15% thereof through the secondary nozzle. The classifier was operated with an amount of air of 530 kg/h corresponding to a gas velocity of 1.5 m/s in the classifier.

Further process conditions and data are shown in table 2.

## TABLE 2

Temperature

| | |
|---|---|
| Feed, °C | 34 |
| Inlet gas to chamber, °C | 198 |
| Gas to classifier, °C | 21 |
| In fluidized bed, °C | 72 |
| Exit gas from chamber, °C | 87 |
| RH*) in chamber, % | 10 |
| MC*) in product, % | 6.5 |

Classifier properties

| | |
|---|---|
| $x_{90}/x_{10}$ ratio | about 3 |
| Cut size/upper dust limit ratio | about 2.6 |

*) RH: Relative humidity; MC: Moisture content

The resulting product was non-dusting and contained only 2% by volume particles of a size less than 125 μm. The particle size distribution was characterized by: $d_{50}$= 495 μm, and 88% between 0.5 $d_{50}$ and 1.5 $d_{50}$.

The flowability-properties of this product was determined by measurement of Hausner ratio: The Hausner ratio for the product produced according to the invention was measured to 1.11.

EXAMPLE 3

Sulfite liquor from a plant for treating cellulose by the sulfite process having a content of dry matter of approx. 50% was granulated in an apparatus similar to the one used in example 1. Between 600 and 700 kg of this liquor was atomized per hour.

Further process conditions and data are shown in table 3.

## TABLE 3

| Temperature | |
|---|---|
| Feed, °C | approx. 40 |
| Inlet gas to chamber, °C | 220 |
| Gas to classifier, °C | 23-26 |
| In fluidized bed, °C | 70 |
| Exit gas from chamber, °C | 94 |
| RH*) in chamber, % | 10 |
| MC*) in product, % | 4 |

*) RH: Relative humidity; MC: Moisture content

Three series of tests were carried out in which the classifier was operated at three different air velocities while the other process conditions were kept essentially constant. For each value of the air velocity the particle distribution in the resulting product was determined. The results showed that the particle size increased monotonously with increasing air velocity in the classifier. The amount of small particles was also reduced when the air velocity was increased.

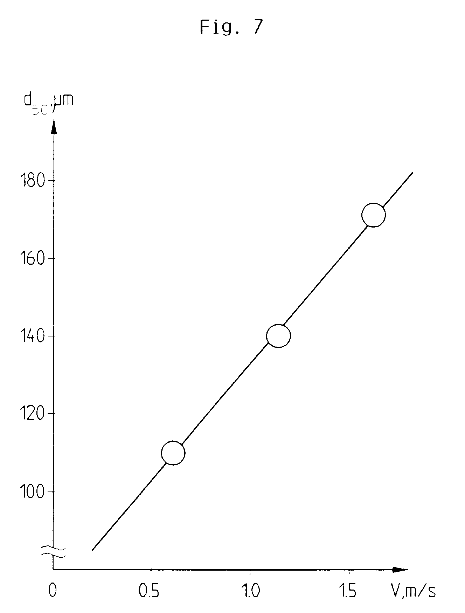

The results are shown in the following table 4 and in fig. 7:

## TABLE 4

| Air velocity m/s | Median diameter $d_{50}$ $\mu m$ | Amount less than 50 $\mu m$ % |
|---|---|---|
| -------- | ------------ | ----------- |
| 0.6 | 110 | 12 |
| 1.1 | 140 | 7 |
| 1.6 | 171 | 5 |

The flowability-properties of these products were determined by measurement of the Hausner ratio:

The Hausner ratios for the products produced according to the invention were measured to 1.22, and did not show any significant variation as function of the air velocity in the classifier.

EXAMPLE 4

Sulfate liquor from a plant for treating cellulose by the sulfate process having a content of dry matter of approx. 30% was granulated in an apparatus similar to the one used in example 1. Spray drying of sulfate liquor normally results in a product containing large amounts of dust.

Two tests were carried out. In the first test a rotary atomizer was used. In the second the feed was atomized by means of a nozzle having a working pressure of 80 bar.

In both tests approx. 400 kg of this liquor was atomized per hour.

Further process conditions and data are shown in table 5.

## TABLE 5

| Temperature | (rot.a./nozzle) |
|---|---|
| Feed, °C | approx. 60 |
| Inlet gas to chamber, °C | 170/175 |
| Gas to classifier, °C | 26 |
| In fluidized bed, °C | 66 |
| Exit gas from chamber, °C | 72/75 |
| RH*) in chamber, % | 19/17 |
| MC*) in product, % | 4 |
| Classifier properties | |
| $x_{90}/x_{10}$ ratio | about 3 |

*) RH: Relative humidity; MC: Moisture content

The air velocity in the classifier was 1.5 m/s corresponding to an amount of air of 520 kg/h.

Particle size distribution and flowability data for the products are shown in table 6. For reasons of comparison corresponding data for a product produced by ordinary spray drying are also shown in table 6.

## TABLE 6

| | Median diameter $d_{50}$ μm | Amount less than 50 μm % | Hausner ratio |
|---|---|---|---|
| Test with rotary atomizer, I*) | 144 | 3 | 1.21 |
| Test with nozzle, I*) | 160 | 2 | 1.19 |
| Test with ordinary spray drying, C*) | 32 | 76 | 1.36 |

*) I: According to the invention; C: Comparison (known art)

It appears from the table that the products produced by the method according to the present invention exhibit a considerably larger particle diameter, a lower content of dust and a lower Hausner ratio than the product produced according the known art. Moreover, there is only a minor difference between the product obtained by the use of a rotary atomizer and the product obtained by the use of a nozzle atomizer.

## Claims

1. A process for producing a substantially dust-free granulate with a desired mean particle size and a narrow particle size distribution by spray drying a solution or suspension of the material to be granulated comprising the steps of
atomizing the solution or suspension to droplets in an atomizing zone in the upper part of a spray drying and granulation zone in a drying chamber;
contacting said atomized solution or suspension with a central downward stream of drying gas and a stream of solid feed particles introduced or blown directly into the upper part of the spray drying and granulation zone to obtain a granulate by enlargement of the size of said particles by collision between droplets and feed particles and between moist feed particles;
adjusting the amount of introduced solution or suspension to the amount and drying capacity of introduced drying gas to ensure a desired moisture content of the particles or granulates leaving the spray drying and granulation zone and evaporation of non colliding droplets to formation of fine particles;
withdrawing a stream of spent drying gas from the spray drying and granulation zone;
withdrawing the particles or granulates leaving the spray drying and granulation zone from the drying chamber; and
subjecting said withdrawn particles or granulates to a size classification into two fractions in a counter-current gas/gravity classifier, preferably multistage, wherein the particles or granulates are introduced in a rising gas stream in a separation zone and separated into a coarse fraction of the predetermined particle size which is withdrawn as product and an undersize fraction, which is withdrawn from the separation zone as an entrained suspension in the exit gas from the classifier and returned to the spray drying and granulation zone as solid feed particles.

2. A process according to claim 1, wherein the particles or granulates leaving the spray drying and granulation zone are subjected to further drying in a second drying zone comprising a fluidized bed arranged at the bottom of the drying chamber before they are withdrawn from the drying chamber.

3. A process according to claim 1 or 2, wherein the countercurrent gas/gravity classifier is a multistage zigzag classifier.

4. A process according to claims 1 or 3, wherein the undersize fraction is reintroduced via a particle exit opening at the bottom of the spray drying agglomeration chamber and blown directly into the upper part of the spray drying and granulation zone by the exit gas from the classifier.

5. A process according to claims 1 or 3, wherein the particles or granulates leaving the spray drying and granulation zone are withdrawn from the drying chamber via a gas lock and the undersize fraction from the classifier is transported to the upper part of the spray drying and granulation chamber entrained by the exit gas from the classifier and introduced into said upper part, optionally after having been separated from said exit gas.

6. A process according to claims 2-3, wherein the particles or granulates are withdrawn through an exit opening situated at the the upper part of the fluidized bed and the undersize fraction is reintroduced via said exit opening and blown directly into the upper part of the spray drying and granulation zone by the exit gas from the classifier.

7. A process according to claims 2-3, wherein the particles or granulates are withdrawn from the fluidized bed via a gas lock or through an exit opening situated at the upper part of the fluidized bed, and the undersize fraction from the classifier is transported to the upper part of the spray drying and granulation chamber entrained by the exit gas from the classifier and introduced into said upper part, optionally after having been separated from said exit gas.

8. A process according to claims 1-7, wherein the cut size of the air classifier is selected within the interval 1.2-5.5 times the upper limit for the dust interval, defined as the size range for unacceptable fines in the product, preferably in the interval 2.0-3.5 times the said upper limit.

9. A process according to claims 1-8, wherein the recycle ratio, defined as the weight ratio between recirculated material and withdrawn product is selected within the range 0.15-3, preferably within the range 0.2-1.0.

**10.** A process according to claims 1-9, wherein the classifier is selected to provide a separation efficiency corresponding to a $x_{90}/x_{10}$-value less than 6.0, preferably less than 4.2, in particular less than 2.5, where $x_y$ is the particle size for which $g(x_y) = y$ % by volume, where $g()$ is the graph of the grade efficiency curve of the classifier.

**11.** A process according to claims 1-10, wherein the product is subjected to cooling in the classifier by introducing a cold gas in the classifier.

**12.** An apparatus for producing a substantially dust-free granulate with a desired mean particle size and a narrow particle size distribution by spray drying a solution or suspension of the material to be granulated comprising a spray drying granulation chamber (1) with substantially conical, downward tapering walls provided with
a drying gas inlet (2), and a liquid inlet (4) provided with an atomizer, arranged in the upper part of the chamber (1);
a drying gas outlet (3);
an inlet for a stream of solid feed particles (8, 11);
a material outlet (5) arranged at the lower part of the chamber (1) connected to a material inlet of a counter-current gas/gravity classifier (6) with a separation gas inlet (7), a product outlet (9) provided with a gas lock (14) and an outlet (8) for a fraction of fine particles suspended in separation gas connected to the inlet (8, 11) for the stream of solid feed particles.

**13.** An apparatus according to claim 12, wherein the material outlet (5) of the chamber (1) is connected to the material inlet of the classifier (6) via a gas lock (15), and the inlet (11) for the stream of solid feed particles is arranged in the upper part of the chamber (1) and connected to the fine material fraction outlet (8) of the classifier (6) via a conduit (10).

**14.** An apparatus according to claim 12, wherein a perforated horizontal plate for supporting a fluidized bed and an inlet for fluidizing gas (13) are arranged at the bottom of the chamber (1).

**15.** An apparatus according to claim 14, wherein an opening functioning as material outlet (5) of the chamber (1) and inlet (8) for the stream of solid feed particles is arranged at the lower part of the chamber (1) at a position over the perforated horizontal plate for supporting the fluidized bed.

**16.** An apparatus according to claim 14, wherein the material outlet (5) of the chamber (1) is arranged at the perforated horizontal plate for supporting the fluidized bed and connected to the material inlet of the classifier (6) via a gas lock (15) or as an opening arranged at the lower part of the chamber (1) at a position over the perforated horizontal plate for supporting the fluidized bed and connected to the material inlet for the classifier (6); and the inlet (11) for the stream of solid feed particles is arranged in the upper part of the chamber (1) and connected to the fine material fraction outlet (8) of the classifier (6) via a conduit (10).

**Patentansprüche**

**1.** Verfahren zur Herstellung eines im wesentlichen staubfreien Granulates mit einer gewünschten mittleren Partikelgröße und einer engen Partikelgrößenverteilung durch Sprühtrocknen einer Lösung oder Suspension des zu granulierenden Materials, das die folgenden Schritte aufweist
Zerstäuben der Lösung oder Suspension zu Tröpfchen in einer Zerstäubungszone im oberen Teil einer Sprühtrocknungs- und Granulationszone in einer Trocknungskammer,
in Kontakt Bringen der zerstäubten Lösung oder Suspension mit einem zentralen abwärtsgerichteten Trocknungsgas-Strom und einem Strom aus festen Einspeisungspartikeln, die in den oberen Teil der Sprühtrocknungs- und Granulationszone zugeführt oder direkt eingeblasen werden, um ein Granulat durch Vergrößerung der Abmessung der genannten Partikel durch Kollision zwischen Tröpfchen und Einspeisungspartikeln und zwischen feuchten Einspeisungspartikeln zu erhalten,
Einstellen der Menge an zugeführter Lösung oder Suspension auf die Menge und Trocknungskapazität von zugeführtem Trocknungsgas, um einen gewünschten Feuchtigkeitsgehalt der Partikel oder Granulate, die die Sprühtrocknungs- und Granulationszone verlassen, und die Verdampfung von nichtkollidierenden Tröpfchen zur Bildung von feinen Partikeln sicherzustellen,
Abziehen eines Stromes von verbrauchtem Trocknungsgas aus der Sprühtrocknungs- und Granulationszone,

Abziehen der Partikel oder Granulate, die die Sprühtrocknungs- und Granulationszone verlassen, aus der Trocknungskammer und

Größenklassifikation der abgezogenen Partikel oder Granulate in zwei Fraktionen in einem vorzugsweise mehrstufigen Gegenstromgas/Schwerkraft-Klassifizierer, wobei die Partikel oder Granulate in einen aufsteigenden Gasstrom in einer Trennzone eingeführt und in eine Grobfraktion mit der vorgegebenen Partikelgröße, die als Produkt abgezogen wird, und eine Untergrößen-Fraktion aufgeteilt werden, die aus der Trennzone als eine in dem aus dem Klassifizierer austretenden Gas mitgeführte Suspension abgezogen und als feste Einspeisungspartikel zu der Sprühtrocknungs- und Granulationszone zurückgeführt wird.

2. Verfahren nach Anspruch 1, bei dem die Partikel oder Granulate, die die Sprühtrocknungs- und Granulationszone verlassen, einer weiteren Trocknung in zweiten Trocknungszone, die ein am Boden der Trocknungskammer angeordnetes Fließbett aufweist, unterzogen werden, bevor sie aus der Trocknungskammer abgezogen werden.

3. Verfahren nach Anspruch 1 oder 2, bei dem der Gegenstromgas/Schwerkraft-Klassifizierer ein mehrstuflger Zickzack-Klassifizierer ist.

4. Verfahren nach Anspruch 1 oder 3, bei dem die Untergrößen-Fraktion über einen Partikelauslaß, der am Boden der Sprühtrocknungs-Agglomerationskammer mündet, zurückgeführt und durch das Austrittsgas aus dem Klassifizierer direkt in den oberen Teil der Sprühtrocknungs- und Granulationszone eingeblasen wird.

5. Verfahren nach Anspruch 1 oder 3, bei dem die Partikel oder Granulate, die die Sprühtrocknungs- und Granulationszone verlassen, über eine Gasschleuse aus der Trocknungskammer abgezogen werden und die Untergrößen-Fraktion aus dem Klassifizierer, mitgenommen durch das Austrittsgas aus dem Klassifizierer, zu dem oberen Teil der Sprühtrocknungsund Granulationskammer transportiert und in diesen oberen Teil zugeführt wird, wahlweise nachdem sie von dem Austrittsgas getrennt worden ist.

6. Verfahren nach Ansprüchen 2-3, bei dem die Partikel oder Granulate durch eine Austrittsöffnung abgezogen werden, die sich am oberen Teil des Fließbettes befindet, und die Untergrößen-Fraktion über diese Austrittsöffnung zurückgeführt und durch das Austrittsgas aus dem Klassifizierer direkt in den oberen Teil der Sprühtrocknungs- und Granulationszone eingeblasen wird.

7. Verfahren nach Ansprüchen 2-3. bei dem die Partikel oder Granulate aus dem unteren Teil des Fließbettes über eine Gasschleuse abgezogen werden oder durch eine Austrittsöffnung, die sich am oberen Teil des Fließbettes befindet, und die Untergrößen-Fraktion aus dem Klassifizierer, mitgenommen durch das Austrittsgas aus dem Klassifizierer, zu dem oberen Teil der Sprühtrocknungs- und Granulationskammer transportiert und in diesen oberen Teil zugeführt wird, wahlweise nachdem sie von dem Austrittsgas getrennt worden ist.

8. Verfahren nach Ansprüchen 1-7, bei dem die Trenngröße des Luft-Klassifizierers in dem Intervall gewählt wird, das dem 1,2-5,5-fachen der oberen Grenze für das Staub-Intervall entspricht, das als Größenbereich für unakzeptierbare Feinanteile in dem Produkt definiert ist, vorzugsweise in dem Intervall entsprechend dem 2,0-3,5-fachen dieser oberen Grenze.

9. Verfahren nach Ansprüchen 1-8, bei dem das Rückführungsverhältnis, das als das Gewichtsverhältnis zwischen dem zurückgeführten Mateial und dem abgezogenen Produkt definiert ist, in dem Bereich von 0,15-3, vorzugsweise im Bereich von 0,2-1,0 gewählt wird.

10. Verfahren nach Ansprüchen 1-9, bei dem der Klassifizierer so gewählt wird, daß er eine Trenneffizienz entsprechend einem $x_{90}/x_{10}$-Wert von weniger als 6,0, vorzugsweise weniger als 4,2, insbesondere weniger als 2,5 aufweist, wobei $x_y$ die Partikelgröße ist, für die $g(x) = y$ % nach Volumen ist, wobei $g()$ der Graph der Siebkurve des Klassifizierers ist.

11. Verfahren nach Ansprüchen 1-10, bei dem das Produkt in dem Klassiflzierer gekühlt wird, indem ein kaltes Gas in den Klassifizier zugeführt wird.

12. Vorrichtung zur Herstellung eines im wesentlichen staubfreien Granulates mit einer gewünschten mittleren Partikelgröße und einer engen Partikelgrößenverteilung durch Sprühtrocknen einer Lösung oder Suspension des zu granulierenden Materials, mit einer Sprühtrocknungs-Granulationskammer (1), mit im wesentlichen konischen, sich nach unten verjüngenden Wänden, die versehen ist

mit einem Trocknungsgas-Einlaß (2) und einem mit einem Zerstäuber versehenen Flüssigkeits-Einlaß (4), die im oberen Teil der Kammer (1) angeordnet sind,

einem Trocknungsgas-Auslaß (3),

einem Einlaß (8, 11) für einen Strom fester Einspeisungspartikel,

einem Material-Auslaß (5), der am unteren Teil der Kammer (1) angeordnet ist und verbunden ist mit einem Material-Einlaß eines Gegenstromgas/Schwerkraft-Klassifizierers (6) mit einem Trenngas-Einlaß (7), einem mit einer Gasschleuse (14) versehenen Produkt-Auslaß (9) und einem Auslaß (8) für eine Fraktion aus in dem Trenngas suspendierten feinen Partikeln, der mit dem Einlaß (8, 11) für den Strom aus festen Einspeisungspartikeln verbunden ist.

**13.** Vorrichtung nach Anspruch 12, bei der der Material-Auslaß (5) der Kammer (1) mit dem Material-Einlaß des Klassifizierers (6) über eine Gasschleuse (15) verbunden ist, und der Einlaß (11) für den Strom aus festen Einspeisungspartikeln im oberen Teil der Kammer (1) angeordnet und über eine Leitung (10) mit dem Auslaß (8) des Klassifizierers (6) für die Feinmaterial-Fraktion verbunden ist.

**14.** Vorrichtung nach Anspruch 12, bei der eine perforierte waagerechte Platte zum Tragen eines Fließbettes und ein Einlaß (13) für Fluidisierungsgas am Boden der Kammer (1) angeordnet sind.

**15.** Vorrichtung nach Anspruch 14, bei der eine Öffnung, die als Material-Auslaß (5) der Kammer sowie als Einlaß (8) für den Strom aus festen Einspeisungspartikeln dient, am unteren Teil der Kammer (1) in einer Position über der perforierten waagerechten Platte zum Tragen des Fließbettes angeordnet ist.

**16.** Vorrichtung nach Anspruch 14, bei der der Material-Auslaß (5) der Kammer (1) an der perforierten waagerechten Platte zum Tragen des Fließbettes angeordnet und mit dem Material-Einlaß des Klassifizierers (6) über eine Gasschleuse (15) verbunden oder als eine Öffnung ausgebildet ist, die am unteren Teil der Kammer (1) in einer Position über der perforierten waagerechten Platte zum Tragen des Fließbettes angeordnet und mit dem Material-Einlaß für den Klassifizierer (6) verbunden ist und der Einlaß (11) für den Strom aus festen Einspeisungspartikeln im oberen Teil der Kammer (1) angeordnet und über eine Leitung (10) mit dem Auslaß (8) des Klassifizierers (6) für die Feinmaterial-Fraktion verbunden ist.

**Revendications**

**1.** Procédé de production d'un granulé sensiblement sans poussière avec une taille de particule moyenne souhaitée et une distribution granulométrique étroite par séchage par pulvérisation d'une solution ou suspension du matériau à granuler comprenant les étapes consistant à

atomiser la solution ou suspension en gouttelettes dans une zone d'atomisation située dans la partie supérieure d'une zone de granulation et de séchage par pulvérisation dans une chambre de séchage ;

mettre en contact ladite solution ou suspension atomisée avec un flux central descendant de gaz de séchage et un flux de particules d'amenée solides introduit ou insufflé directement dans la partie supérieure de la zone de granulation et de séchage par pulvérisation pour obtenir un granulé par agrandissement de la taille desdites particules par collision entre gouttelettes et particules d'amenée et entre particules d'amenée humides ;

ajuster la quantité de solution ou de suspension introduite à la quantité et à la capacité de séchage du gaz de séchage introduit, pour assurer une teneur en eau souhaitée des particules ou granulés quittant la zone de granulation et de séchage par pulvérisation et l'évaporation de gouttelettes n'entrant pas en collision pour la formation de particules fines ;

extraire un flux de gaz de séchage épuisé de la zone de granulation et de séchage par pulvérisation ;

extraire les particules ou granulés quittant la zone de granulation et de séchage par pulvérisation provenant de la chambre de séchage ; et

soumettre lesdits granulés ou particules extraits à une classification par taille en deux fractions dans un classificateur gravimétrique/gaz à contre-courant, préférentiellement multi-étagé, dans lequel les particules ou granulés sont introduits dans un flux gazeux montant situé dans une zone de séparation et séparés en une fraction grossière de la taille de particule prédéterminée, qui est extraite en tant que bon produit et en une fraction de refus inférieur, qui est retirée de la zone de séparation, en tant que suspension entraînée dans le gaz de sortie provenant du classificateur, et ramenée à la zone de granulation et de séchage par pulvérisation en tant que particules d'amenée solides.

2. Procédé conforme à la revendication 1, dans lequel les particules ou granulés quittant la zone de granulation et de séchage par pulvérisation sont soumis à un séchage additionnel dans une seconde zone de séchage comprenant un lit fluidisé disposé à la base de la chambre de séchage avant d'être retirés de la chambre de séchage.

3. Procédé selon la revendication 1 ou 2, dans lequel le classificateur gravimétrique/gaz à contre-courant est un classificateur zigzag multi-étagé.

4. Procédé selon les revendications 1 ou 3, dans lequel la fraction de refus inférieur est réintroduite via une ouverture de sortie de particules à la base de la chambre d'agglomération et de séchage par pulvérisation et insufflée directement dans la partie supérieure de la zone de granulation et de séchage par pulvérisation par le gaz de sortie provenant du classificateur.

5. Procédé selon les revendications 1 ou 3, dans lequel les particules ou granulés quittant la zone de granulation et de séchage par pulvérisation sont extraits de la chambre de séchage via un sas à gaz et la fraction de refus inférieur provenant du classificateur est transportée à la partie supérieure de la chambre de granulation et de séchage par pulvérisation, est entraînée par le gaz de sortie provenant du classificateur et introduite dans ladite partie supérieure, facultativement après avoir été séparée dudit gaz de sortie.

6. Procédé selon les revendications 2-3, dans lequel les particules ou granulés sont extraits par une ouverture de sortie située à la partie supérieure du lit fluidisé, la fraction de refus inférieur est réintroduite via ladite ouverture de sortie et insufflée directement dans la partie supérieure de la zone de granulation et de séchage par pulvérisation par le gaz de sortie provenant du classificateur.

7. Procédé selon les revendications 2-3, dans lequel les particules ou granulés sont extraits du lit fluidisé via un sas à gaz ou en passant à travers une ouverture de sortie située à la partie supérieure du lit fluidisé, et la fraction de refus inférieur provenant du classificateur est transportée à la partie supérieure de la chambre de granulation et de séchage par pulvérisation, entraînée par le gaz de sortie provenant du classificateur et introduite dans ladite partie supérieure, facultativement après avoir été séparée dudit gaz de sortie.

8. Procédé selon les revendications 1-7, dans lequel la taille de fractionnement du classificateur à air est sélectionnée dans la plage comprise entre 1,2 et 5,5 fois la limite supérieure de la plage d'impuretés définie comme étant la plage de taille des fines inacceptables dans le produit, préférentiellement dans la plage allant de 2,0 à 3,5 fois ladite limite supérieure.

9. Procédé selon les revendications 1-8, dans lequel le taux de recyclage, défini comme étant le rapport pondéral entre le matériau recirculé et le produit extrait, est sélectionné dans la plage allant de 0,15 à 3, préférentiellement dans la plage allant de 0,2 à 1,0.

10. Procédé selon les revendications 1-9, dans lequel le classificateur est ajusté pour fournir un rendement de séparation correspondant à une valeur $x_{90}/x_{10}$ inférieure à 6,0, préférentiellement inférieure à 4,2, notamment inférieure à 2,5, où $x_y$ est la taille de la particule pour laquelle $g(x_y) = y$ % en volume, où $g()$ est le graphe de la courbe de rendement du classificateur.

11. Procédé selon les revendications 1-10, dans lequel le produit est soumis au refroidissement dans le classificateur en introduisant un gaz froid dans le classificateur.

12. Appareil de production d'un granulé sensiblement sans poussière, avec une taille de particule moyenne souhaitée et une distribution granulométrique étroite par séchage par pulvérisation d'une solution ou suspension de matériau à granuler comprenant une chambre de granulation par séchage par pulvérisation (1) avec des parois sensiblement coniques, effilées vers le bas, avec
une entrée de gaz de séchage (2), et une entrée de liquide (4) munie d'un atomiseur, agencées dans la partie supérieure de la chambre (1) ;

une sortie de gaz de séchage (3) ;

une entrée pour un flux de particules d'amenée solides (8, 11) ;

une sortie de matériau (5) agencée à la partie inférieure de la chambre (1), reliée à une entrée de matériau d'un classificateur gravimétrique/gaz à contre-courant (6) avec une entrée de gaz de séparation (7), une sortie de produit (9) munie d'un sas à gaz (14) et d'une sortie (8), prévue pour une fraction de particules fines en suspension dans le gaz de séparation, reliée à l'entrée (8, 11) prévue pour le flux des particules d'amenée solides.

13. Appareil selon la revendication 12, dans lequel la sortie de matériau (5) de la chambre (1) est reliée à l'entrée de matériau du classificateur (6) par l'intermédiaire d'un sas à gaz (15), et l'entrée (11) prévue pour l'écoulement des particules d'amenée solides est agencée dans la partie supérieure de la chambre (1), et est reliée à la sortie (8) de la fraction de matériau fin du classificateur (6) par l'intermédiaire d'un conduit (10).

14. Appareil selon la revendication 12, dans lequel une tôle horizontale perforée pour supporter un lit fluidisé et une entrée pour le gaz fluidisant (13) sont agencées à la base de la chambre (1).

15. Appareil selon la revendication 14, dans lequel une ouverture servant de sortie de matériau (5) de la chambre (1) tout comme d'entrée (8) pour le flux des particules d'amenée solides est agencée à la partie inférieure de la chambre (1), au-dessus de la tôle horizontale perforée destinée à supporter le lit fluidisé.

16. Appareil selon la revendication 14, dans lequel la sortie de matériau (5) de la chambre (1) est agencée au niveau de la tôle horizontale perforée, destinée à supporter le lit fluidisé, et est reliée à l'entrée de matériau du classificateur (6) par l'intermédiaire d'un sas à gaz (15) ou en ouverture agencée à la partie inférieure de la chambre (1), au-dessus de la tôle horizontale perforée destinée à supporter le lit fluidisé, et reliée à l'entrée de matériau pour le classificateur (6) ; et l'entrée (11) pour le flux des particules d'amenée solides est agencée dans la partie supérieure de la chambre (1) et est reliée à la sortie (8) de la fraction de matériau fin du classificateur (6) par l'intermédiaire d'un conduit (10).

Fig. 1

Fig. 2

Fig. 3

Fig. 4

FIG. 5

FIG. 6

Fig. 7